# EUROPEAN PATENT APPLICATION

(11) **EP 4 574 230 A1**
(43) Date of publication of application: **25.06.2025**
(21) Application number: 23219595.8
(22) Date of filing: 22.12.2023
(51) Int. Cl.: B01D 29/96, B01D 35/02, E04H 4/16

(54) **BASKET TYPE FILTER ASSEMBLY**

(71) Applicant: Yunda H&H Tech (Tianjin) Co., Ltd., Jinghai Economic and Technology Development Zone Tianjin 301600 (CN)
(72) Inventor: WEI, Enyu, Tianjin, 301600 (CN); XU, Hao, Tianjin, 301600 (CN); ZHANG, Huixin, Tianjin, 301600 (CN); HAO, Pingyu, Tianjin, 301600 (CN); YANG, Xu, Tianjin, 301600 (CN); YUAN, Yinping, Tianjin, 301600 (CN); PENG, Yu, Tianjin, 301600 (CN)
(74) Representative: 2SPL Patentanwälte PartG mbB

(57) **Abstract**

A basket type filter assembly is provided, which belongs to the technical field of water surface cleaning devices. The basket type filter assembly includes a filter basket, and a cover. The filter basket is provided with a hinge portion on a side and a clamping portion on an opposite side. The hinge portion is hinged with one side of the cover, the other side of the cover is configured for being clamped with a buckle, and the other side of the cover is pressed against the clamping portion. The cover is hinged with the filter basket, the filter basket is clamped to the cover by the buckle, and the cover is pressed against the filter basket, such that the filter basket and the cover can be fixed at the same time. The cover can be taken out together when the filter basket is taken out, and the cover is kept to cover the filter basket, such that the garbage in the filter basket can be prevented from scattering in the filter basket cleaning process, and environmental pollution is avoided.

## Description

### TECHNICAL FIELD

The present disclosure relates to the technical field of water surface cleaning devices, in particular to a basket type filter assembly.

### BACKGROUND

Water surface cleaning devices are mainly used to clean floating objects such as plastic bags, leaves and other garbage floating on the water surface, so as to ensure the cleanliness of the water environment, and are mainly used in rivers, water sources or swimming pools.

The working principle of the water surface cleaning device is to collect floating objects into a built-in filter basket by the water surface cleaning device that floats on the water surface, and to clean the impurities in the filter basket regularly. The working nature of the water surface cleaning device leads to the need to dismount and clean the filter basket frequently. Therefore, it is necessary for the filter basket to have convenient dismountable performance, otherwise inconvenience in use will be caused.

At present, during the dismounting of the filter basket of the existing water surface cleaning devices, it is usually necessary to open the upper cover to take out the filter basket, then put the cleaned filter basket into the main body of the device, and finally close the upper cover. In such a structure, the upper cover needs to be turned over at a large angle or directly dismounted. As the upper cover and the filter basket are in a separated state, after the filter basket is taken out, the garbage inside the filter basket may be scattered before dumping the garbage, causing pollution to the surrounding environment.

Therefore, how to dismount the filter basket conveniently and effectively avoid environmental pollution caused in the filter basket cleaning process is a technical problem to be solved.

### SUMMARY

The embodiments aim to provide a basket type filter assembly, so as to solve the above mentioned problems in the prior art. By hinging a cover with a filter basket, the cover can be taken out together when the filter basket is taken out, such that the garbage in the filter basket can be prevented from scattering in the filter basket cleaning process, and environmental pollution is avoided.

To achieve the objective above, the present disclosure provides the following technical solution.

A basket type filter assembly is provided by the present disclosure, which includes a filter basket and a cover. The filter basket is provided with a hinge portion on a side and a clamping portion on an opposite side. The hinge portion is hinged with one side of the cover. An other side of the cover is configured for being clamped with a buckle, and the other side of the cover is pressed against the clamping portion.

In some embodiments, the cover may include a bottom, and a wall connected with the bottom. The bottom may be provided with an edge on an outer side of the wall. The edge may be provided with rotating shafts. The hinge portion may be provided with shaft holes. Each of the rotating shafts may be in rotatable fit with a corresponding one of the shaft holes.

In some embodiments, the edge may be provided with vertical plates opposite to each other. Each of the vertical plates may be provided with one of the rotating shafts at an outer side. Each of the vertical plates may be provided with reinforcing ribs at an inner side. The hinge portion may be provided with a groove. The shaft holes may be provided in two opposite side walls of the groove.

In some embodiments, the edge may be provided with a clamping groove, and the clamping groove may be configured for being clamped with the buckle.

In some embodiments, the basket type filter assembly may be configured for being installed in a machine body of a water surface cleaning device. The machine body may be provided with an opening for the basket type filter assembly to move in and out. The opening may be provided with a supporting table at an inner diameter side. The supporting table may be configured for supporting the edge.

In some embodiments, limiting stop ribs may be provided at one side, where the hinge portion may be located, of the filter basket. A limiting surface may be provided at a position corresponding to an inner side of the opening. The limiting stop ribs and the limiting surface may extend in a direction along which the filter basket may move in and out. The limiting surface may be configured for limiting rotation of the limiting stop ribs around the clamping portion.

In some embodiments, the cover may be provided with a concealed handle which may be hollow. The filter basket may be provided with a boss for holding on one side of the clamping portion, and the boss may extend in a direction towards the concealed handle.

In some embodiments, the cover may be provided with a concealed handle which may be hollow. The filter basket may be provided with a lift handle on one side, close to the clamping portion, of the filter basket. The lift handle may be arranged over and across the filter basket.

In some embodiments, an inlet may be formed in the filter basket. The inlet and the clamping portion may be located on a same side of the filter basket. The inlet may be provided with a rolling brush. A flexible baffle may be provided at one side, parallel to the rolling brush, of the inlet. A rotating direction of the rolling brush may orient towards an inside of the filter basket at the flexible baffle.

In some embodiments, a dosing box may be provided at an inner bottom surface of the filter basket. The dosing box may be provided with a chemical box cover. A peripheral wall of the chemical box cover may be provided with V-shaped grooves. An outer wall of the dosing box may be provided with protrusions. Each of the V-shaped grooves may be buckled to a corresponding one of the protrusions to achieve a connection of the chemical box cover and the dosing box.

In some embodiments, the flexible baffle may include a mounting portion and a free portion connected to each other. The mounting portion may be connected to the filter basket. The free portion may be located in a gap between the rolling brush and the filter basket.

In some embodiments, the filter basket may be provided with mounting holes. The mounting portion may be provided with mounting buckles. Each of the mounting buckles may be buckled into a corresponding one of the mounting holes in a direction towards the inside of the filter basket. The mounting portion may be located at an outer side of the filter basket.

In some embodiments, the filter basket may be provided with mounting holes. The mounting portion may be provided with mounting buckles. Each of the mounting buckles may be buckled into a corresponding one of the mounting holes in a direction towards an outside of the filter basket. The mounting portion may be located at an inner side of the filter basket.

In some embodiments, each of the mounting buckles may include a cylinder, and a taper head connected to an end of the cylinder. A diameter of the cylinder may be smaller than a diameter of each of the mounting holes. A maximum diameter of the taper head may be greater than the diameter of the mounting hole.

In some embodiments, the flexible baffle may be provided between a lower side of the rolling brush and the filter basket. A spacing between the rolling brush and the flexible baffle may be less than a spacing between an upper side of the rolling brush and the filter basket.

In some embodiments, the rolling brush may include a central shaft, and guide vanes radially distributed on the central shaft. The guide vanes may include sheet-like guide vanes and/or columnar guide vanes. When both the sheet-like guide vanes and the columnar guide vanes may be provided, the sheet-like guide vanes and the columnar guide vanes may be distributed at intervals in an axial direction and a circumferential direction of the central shaft.

In some embodiments, a thickness of a middle portion of each of the sheet-like guide vanes and/or a thickness of a middle portion of each of the columnar guide vanes may be greater than or equal to an edge thickness of each of the sheet-like guide vanes and/or each of the columnar guide vanes.

Compared with the prior art, the embodiments can obtain the following beneficial technical effects.

The cover is hinged with the filter basket, the filter basket is clamped to the cover by the buckle, and the cover is pressed against the filter basket, such that the filter basket and the cover can be fixed at the same time. The cover can be taken out together when the filter basket is taken out, and the cover is kept to cover the filter basket, such that the garbage in the filter basket can be prevented from scattering in the filter basket cleaning process, and environmental pollution is avoided.

Other technical solutions involved in the embodiments further can obtain the following technical effects.

By providing the flexible baffle between the rolling brush and the inlet of the filter basket, the gap between the rolling brush and the filter basket is narrowed. When there is garbage caught in the gap, the flexible baffle can be driven by the rolling brush to deform into the filter basket, such that larger garbage can be caught in. After the garbage enters the filter basket, the gravity of the garbage itself is not enough to deform the flexible baffle outward, therefore the garbage can be avoided from coming out of the filter basket.

### BRIEF DESCRIPTION OF THE DRAWINGS

To describe the technical solutions of the embodiments of the present disclosure or in the prior art more clearly, the following briefly introduces the drawings required for describing the embodiments. Apparently, the drawings in the following description show merely some embodiments of the present disclosure, and those of ordinary skill in the art may still derive other drawings from these drawings without creative efforts.
FIG. 1 is a structural schematic diagram of a water surface cleaning device according to the present disclosure;
FIG. 2 is a schematic diagram of an overall structure according to the present disclosure;
FIG. 3 is a schematic diagram of a sectional structure of portion A in FIG. 1;
FIG. 4 is a schematic diagram of a machine body of a water surface cleaning device and an opening structure of the machine body;
FIG. 5 is a structural schematic diagram of a cover according to the present disclosure;
FIG. 6 is a structural schematic diagram of a filter basket according to the present disclosure;
FIG. 7 is a schematic diagram showing a mounting structure of a motor of a water surface cleaning device;
FIG. 8 is a schematic diagram of a partial exploded structure according to the present disclosure;
FIG. 9 is a schematic diagram of a local sectional structure of a mounting portion of a flexible baffle according to the present disclosure;
FIG. 10 is a structural schematic diagram of a flexible baffle according to the present disclosure;
FIG. 11 is a structural schematic diagram of a rolling brush according to the present disclosure;
FIG. 12 is another structure form of FIG. 4;
FIG. 13 is another structure form of FIG. 5;
FIG. 14 is another structure form of FIG. 6;
FIG. 15 is a structure form of FIG. 14 provided with a lift handle; and
FIG. 16 is another structure form of FIG. 11.

List of the reference characters: 1 machine body; 2 cover; 3 filter basket; 4 rolling brush; 5 flexible baffle; and 6 lift handle;
11 buckle; 12 limiting surface; 13 supporting table; and 14 opening;
21 concealed handle; 22 rotating shaft; 23 clamping groove; 24 edge; 25 bottom; and 26 wall;
31 limiting stop rib; 32 shaft hole; 33 boss; 34 dosing box; 35 chemical box cover; 36 hinge portion; 37 clamping portion; 38 inlet; and 39 mounting hole;
41 central shaft; 4 sheet-like guide vane; 43 columnar guide vane; 44 motor; and 45 transmission gear; and
51 mounting portion; 511 mounting buckle; and 52 free portion.

### DETAILED DESCRIPTION OF THE EMBODIMENTS

The following clearly and completely describes the technical solutions in the embodiments of the present disclosure with reference to the drawings in the embodiments of the present disclosure. Apparently, the described embodiments are merely a portion rather than all of the embodiments of the present disclosure. All other embodiments obtained by a person of ordinary skill in the art based on the embodiments of the present disclosure without creative efforts shall fall within the protection scope of the present disclosure.

The embodiments aim to provide a basket type filter assembly, so as to solve the above mentioned problems in the prior art. By hinging a cover with a filter basket, the cover can be taken out together when the filter basket is taken out, such that the garbage in the filter basket can be prevented from scattering in the filter basket cleaning process, and environmental pollution is avoided.

In order to make the objectives, technical solutions and advantages of the present disclosure more clearly, the present disclosure is further described in detail below with reference to the embodiments.

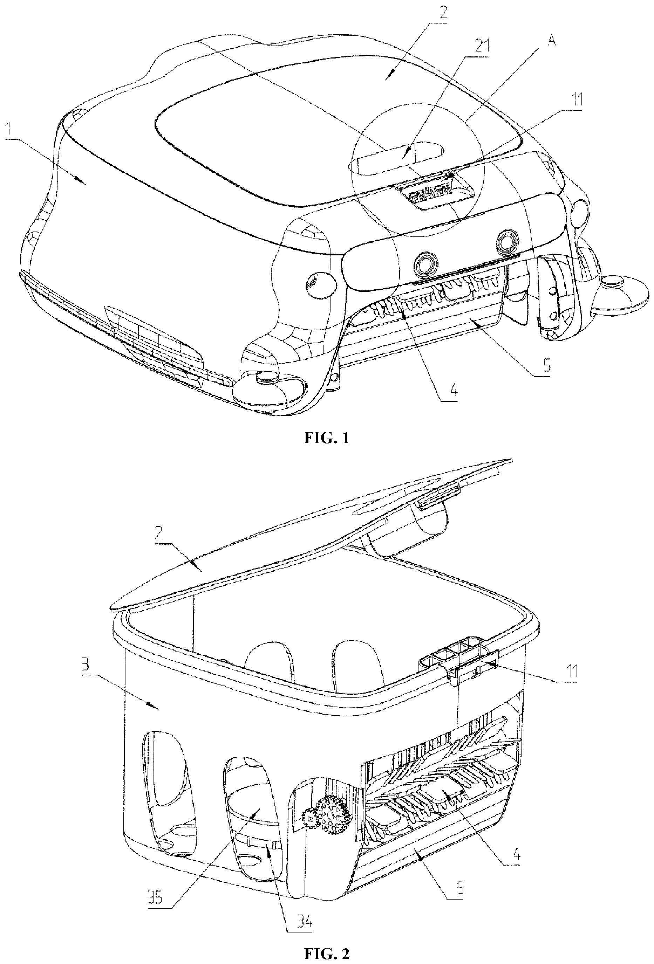

As shown in FIG. 1 to FIG. 6, the basket type filter assembly provided by the present disclosure is mainly applied to a water surface cleaning device to serve as a storage structure for collecting and storing garbage in the water surface cleaning device. The water surface cleaning device includes a machine body 1, and accessories mounted on the machine body 1. The machine body 1 is further provided with an opening 14 for a filter basket 3 to get in and out. The filter basket 3 enters from the opening 14 to achieve the mounting of the filter basket 3 and the machine body, and the filter basket 3 is driven by the machine body 1 to collect garbage such as floating objects on the water surface. After the filter basket 3 is taken out from the opening 14, the garbage in the filter basket 3 can be treated, and the filter basket 3 can be cleaned. The basket type filter assembly includes the filter basket 3, and a cover 2. Two opposite sides of the filter basket 3 are respectively provided with a hinge portion 36, and a clamping portion 37. The hinge portion 36 is hinged with one side of the cover 2, the other side of the cover 2 is configured for being clamped with a buckle 11. That is, the buckle 11 is arranged on one side of the opening 14 of the machine body 1. The buckle 11 may be a structure clamped by turning over, a clamping force is provided by a snap spring, and the buckle 11 can be opened by overcoming the clamping force of the snap spring. At this time, the clamping portion 37 of the filter basket 3 is located below the cover 2, the other side of the cover 2 is pressed against the clamping portion 37, and the filter basket 3 is clamped after the cover 2 is clamped by the buckle 11.

The cover 2 is hinged with the filter basket 3, the filter basket 3 is clamped to the cover 2 by the buckle 11, and the cover 2 is pressed against the filter basket 3, so as to achieve the simultaneous fixation of the filter basket 3 and the cover 2. The cover 2 can be taken out together when the filter basket 3 is taken out, and the cover 2 is kept to cover the filter basket 3, such that the garbage in the filter basket 3 can be prevented from scattering in the filter basket cleaning process, and environmental pollution is avoided.

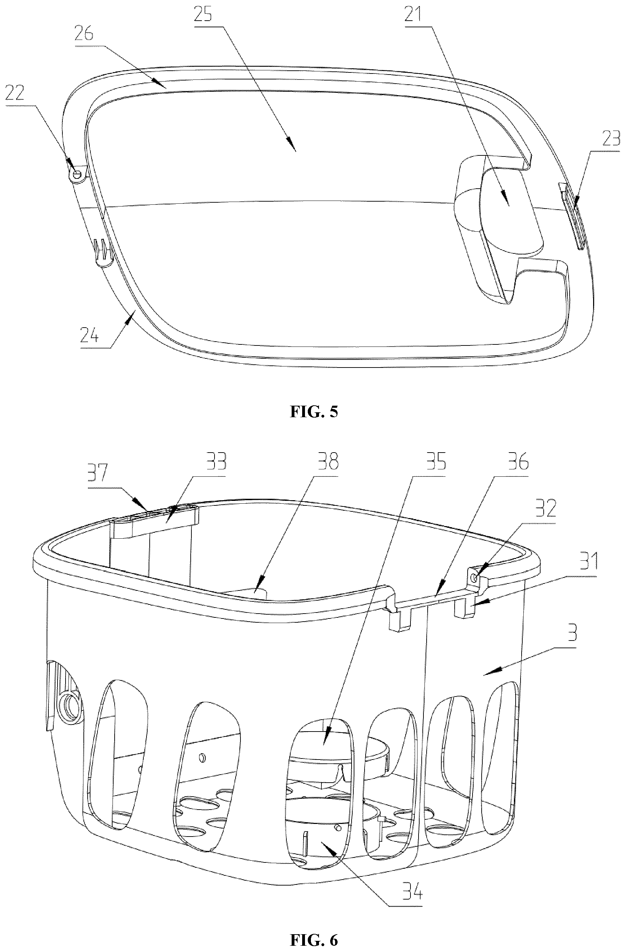

As shown in FIG. 5 and FIG. 6, the cover 2 includes a bottom 25, and a wall 26 connected to the bottom 25. The wall 26 extends into the opening, the bottom 25 is provided with an edge 24 on an outer side of the wall 26, and the edge 24 is provided with rotating shafts 22. The hinge portion 36 is provided with shaft holes 32, and the rotating shafts 22 can be in rotatable fit with the shaft holes 32 to achieve the hinged connection of the cover 2 and the filter basket 3. The filter basket 3 can be opened or closed by rotating the cover 2.

Further, the edge 24 is provided with vertical plates opposite to each other, an outer side of one vertical plate (one side close to another vertical plate is an inner side, and one side away from another vertical plate is an outer side) is provided with the rotating shaft 22. In order to guarantee the connection strength of the vertical plate, the inner side of the vertical plate may be provided with reinforcing ribs, the hinge portion 36 is provided with a groove, and two opposite side walls of the groove are provided with shaft holes 32. By extruding the vertical plate inwards, the rotating shaft 22 may be mounted into the shaft hole 32, and the fitting stability of the rotating shaft 22 and the shaft hole 32 can be ensured by applying the elasticity of the vertical plate and the strength of the reinforcing ribs.

As shown in FIG. 5, the edge 24 is provided with a clamping groove 23, the clamping groove 23 is configured for being clamped with the buckle 11, and the buckle 11 may be buckled and clamped into the clamping groove 23 when rotating or moving.

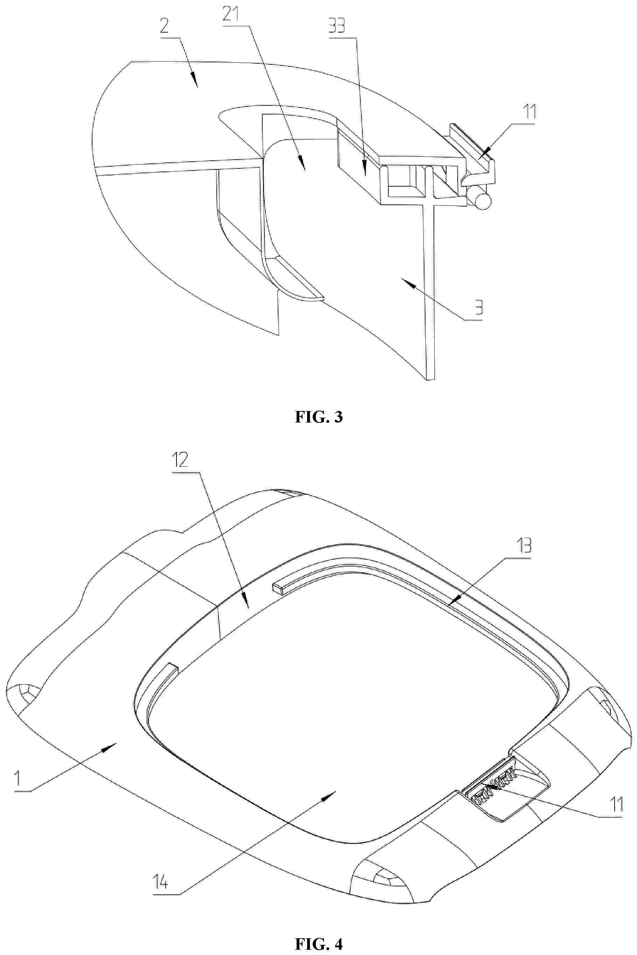

As shown in FIG. 4 and FIG. 5, an inner diameter side of the opening 14 of the machine body 1 is provided with a supporting table 13 for supporting the edge 24. An inner diameter side of the supporting table 13 may be attached to the wall 26 to further limit the stability of the cover 2 after mounting.

As shown in FIG. 4 and FIG. 6, a limiting stop rib 31 is provided at one side, where the hinge portion 36 is located, of the filter basket 3. There may be one or more limiting stop ribs 31, preferably, there are two limiting stop ribs 31, which are distributed on both sides of the hinge portion 36. A corresponding position at the inner side of the opening 14 of the machine body 1 is provided with a limiting surface 12. The limiting stop rib 31 and the limiting surface 12 extend in a direction that the filter basket 3 moves in and out. After the filtering basket 3 is mounted, the limiting stop rib 31 is attached to the limiting surface 12, and the limiting surface 12 can only relatively slide with respect to the limiting stop rib 31, while the limiting surface 12 can limit the rotation of the limiting stop rib 31 around the clamping portion 37 (In a clamped state of the clamping portion 37, equivalent to a rotation center, if the limiting stop rib 31 and the limiting surface are not provided, the filter basket 3 can rotate around the clamping portion 37). The cooperation of the limiting stop rib 31 and the limiting surface 12 can restrict the rotation of the filter basket 3 around the clamping portion 37, but does not hinder the translation of the filter basket 3 in the direction for getting in and out. The clamping action of the buckle 11 can restrict the translation of the filter basket 3 in the direction for getting in and out, but does not hinder the rotation of the filter basket 3 around the clamping portion 37. Therefore, by restricting the rotation of the filter basket 3 and the translation of the filter basket 3 in the direction for getting in and out, the filter basket 3 can be limited in the machine body 1 to achieve stable mounting. When dismounting the filter basket 3, the filter basket 3 can be taken out conveniently by releasing the clamping of the buckle 11, and the mounting and dismounting are both convenient.

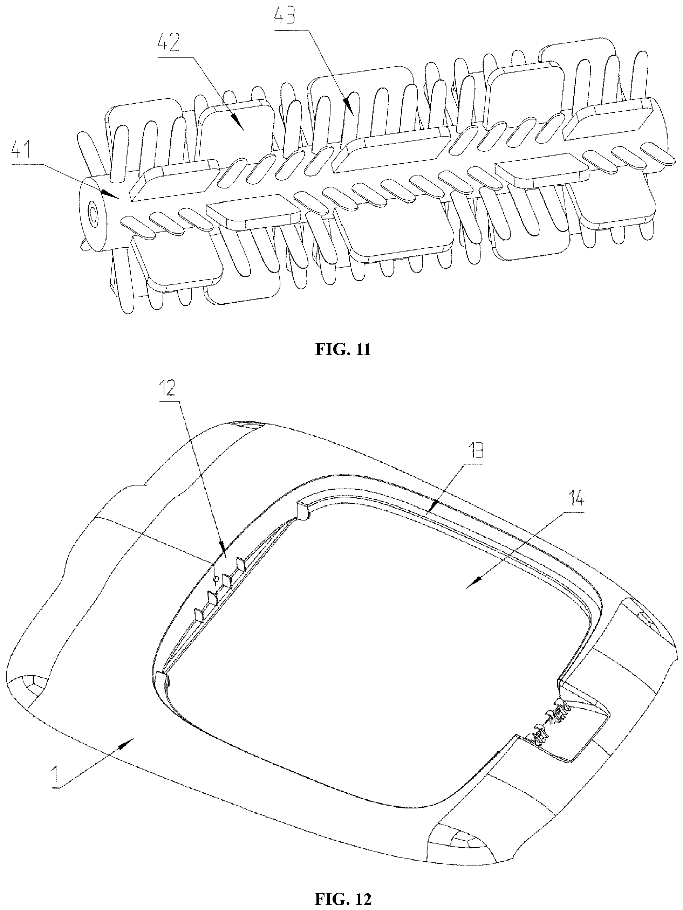

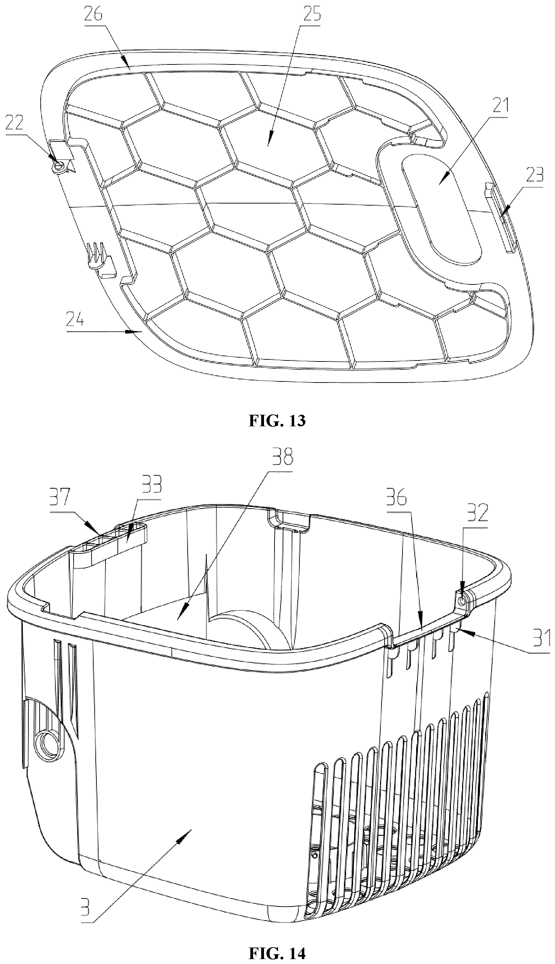

In addition, as shown in FIG. 12 and FIG. 14, the limiting surface 12 may be provided with a transverse rib, and the limiting stop rib 31 can be provided in a stepped shape. In this case, the limiting stop rib 31 can be clamped at the position of the rib. Therefore, the cooperation of the limiting stop rib 31 and the rib on the limiting surface 12 can restrict the rotation of the filter basket 3 around the clamping portion 37, but does not hinder the translation of the filter basket 3 in the direction for getting in and out. Moreover, multiple vertical strips perpendicular to the rib are provided above the rib, the limiting stop ribs 31 and the vertical strips are arranged at intervals to play a role of limiting and guiding.

Further, an inner wall of between the supporting table 13 and the opening 14 is chamfered, and the edge 24 away from a side of the concealed handle 21 may cause interference between the cover 2 and the supporting table 13 or other portions of the machine body 1 when the cover 2 is turned up, and the cover 2 cannot be completely opened and can only opened at a certain angle, for example, a tilt angle not exceeding 30°. The cover 2 can be completely opened only after the filter basket 3 and the cover 2 are taken out together.

As shown in FIG. 3 and FIG. 5, the cover 2 is provided with a hollow concealed handle 21, the filter basket 3 is provided with a boss 33 for holding on one side of the clamping portion 37. The boss 33 extends towards a direction of the concealed handle 21, and the boss 33 can be dragged after a user puts a hand into the concealed handle 21. The cover 2 is above the boss 33, and the filter basket 3 and the cover 2 can be taken out together after a clamping state of the buckle 11 on the cover 2 is released.

As shown in FIG. 5, an inner bottom surface of the bottom 25 may be smooth, and the concealed handle 21 protrudes inward to one side. As shown in FIG. 13, the inner bottom surface of the bottom 25 is provided with honeycomb-shaped reinforcing ribs, which can improve the structural strength of the bottom 25, and the concealed handle 21 has no inward protruding structure.

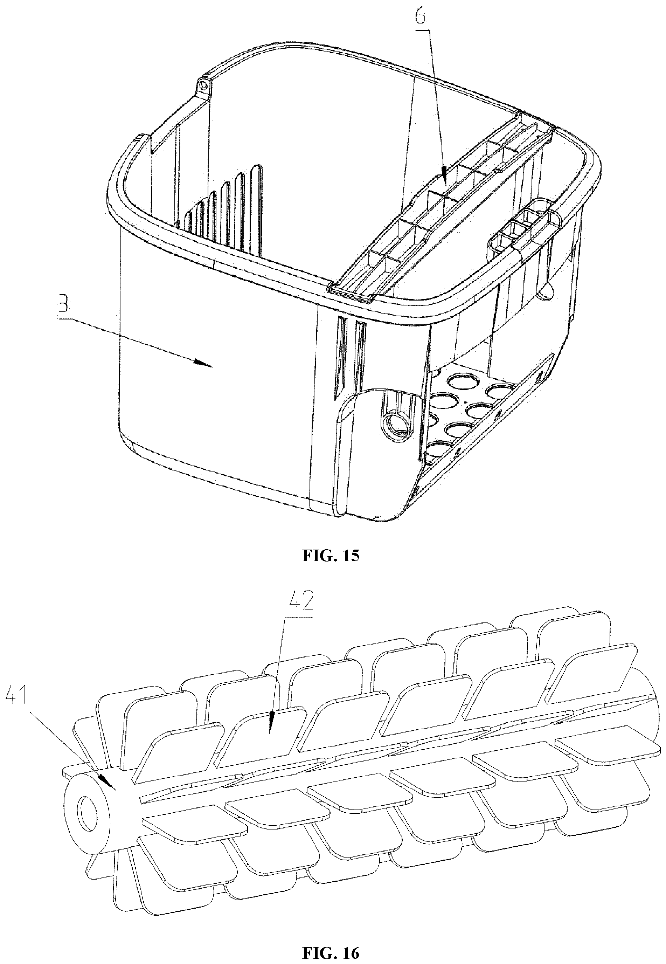

As shown in FIG. 13 and FIG. 15, in this embodiment, the top of the filter basket 3 may be provided with a lift handle 6, the lift handle 6 is provided close to the clamping portion 37, at this time, the concealed handle 21 is as shown in FIG. 13. After putting a hand into the concealed handle 21, the lift handle 6 can be dragged, so that the filter basket 3 and the cover 2 can be conveniently taken out together with the lift handle 6. The lift handle 6 is mounted over and across the top opening of the filter basket 3, and after the cover 2 is opened, the filter basket 3 can be lifted conveniently, and the convenience of application is improved.

As shown in FIG. 2, the basket type filter assembly includes a rolling brush 4, and a flexible baffle 5. An inlet 38 is formed in the filter basket 3, and the inlet 38 and the clamping portion 37 are located on the same side of the filter basket 3. The rolling brush 4 is mounted at the inlet 38 of the filter basket 3 and is driven by a driving motor to rotate, and garbage floating on the water surface can be caught into the filter basket 3 through the inlet 38 by the rotating rolling brush 4. One side of the inlet 38 parallel to the rolling brush 4 may also be provided with the flexible baffle 5. In general, the flexible baffle 5 is located at a lower side of the inlet 38, and a rotating direction of the rolling brush 4 orients towards an inside of the filter basket 3 at the flexible baffle 5. When there is garbage caught in, the flexible baffle 5 can be driven by the rolling brush 4 to deform into the filter basket 3, such that larger garbage can be caught in. After the garbage enters the filter basket 3, the gravity of the garbage itself is not enough to deform the flexible baffle 5 outwards, so the garbage can be avoided from coming out of the filter basket.

By providing the flexible baffle 5 between the rolling brush 4 and the inlet 38 of the filter basket 3, the gap between the rolling brush 4 and the filter basket 3 is narrowed. When garbage is caught in the gap, the flexible baffle 5 can be driven by the rolling brush 4 to deform into the filter basket 3, such that larger garbage can be caught in. After the garbage enters the filter basket 3, the gravity of the garbage itself is not enough to deform the flexible baffle 5 outward, so the garbage avoided from coming out of the filter basket.

As shown in FIG. 2 and FIG. 6, the whole filter basket 3 is of a hollow structure, and a filter screen can be arranged at a hollow hole to ensure that water can flow freely, while the incoming garbage and other sundries are trapped inside the filter basket 3; or no filter screen is provided at the hollow hole, the garbage entering the filter basket 3 can be prevented from being discharged again by directly using the size of the hole. A dosing box 34 is provided at an inner bottom surface of the filter basket 3, the dosing box 34 is filled with solid chemical, which can be configured for disinfection and other treatment of water environment. The top of the dosing box 34 may be provided with a chemical box cover 35, the chemical box cover 35 may be connected with protrusions on the dosing box 34 by means of V-shaped grooves provided on a peripheral wall to achieve the connection of the dosing box 34 and the chemical box cover 35, thus limiting the chemical into a space formed by the dosing box 34 and the chemical box cover 35. The chemical box cover 35 may be closed or provided with hollowed holes, and the dosing box 34 and the filter basket 3 share the same bottom, which is provided with hollowed holes, through which the chemical can be gradually dissolved and enter the external water.

As shown in FIG. 2 and FIG. 6, the hollow hole on the filter basket 3 may be provided in the shape of such as elliptic and round holes. Elliptical holes are provided on each side face of the filter basket 3, and circular holes are provided on the bottom surface. As shown in FIG. 14 and FIG. 15, one side opposite to the inlet 38 of the filter basket 3 is provided with elongated holes, and multiple elongated holes are arranged side by side, while no holes are provided on other side faces, and circular holes are provided on the bottom surface, such that the water entering from the inlet 38 can directly flow to the elongated holes at the rear for drainage.

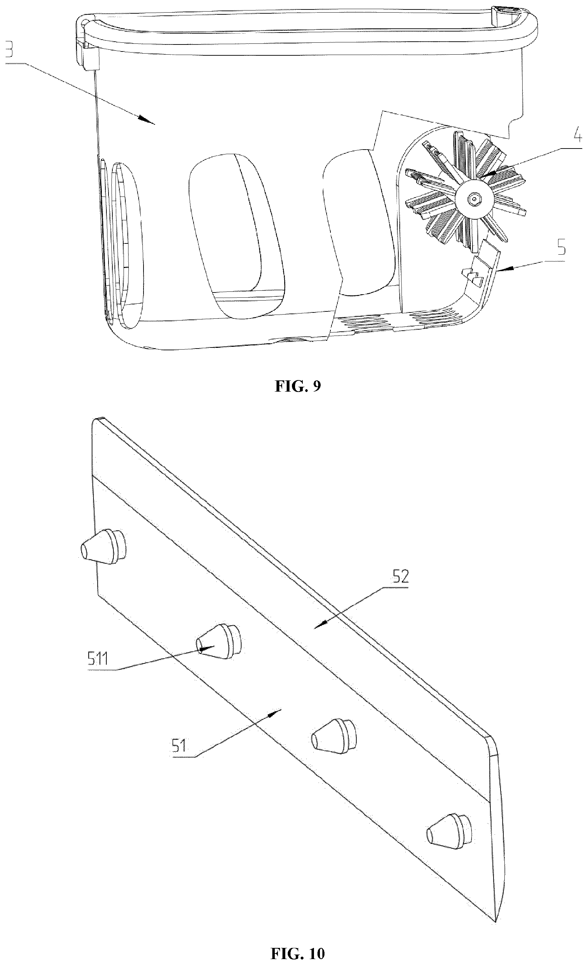

In conjunction with FIG. 10, the flexible baffle 35 includes a mounting portion 51 and a free portion 52 connected with each other. The mounting portion 51 can be manufactured thicker than the free portion 52, because the free portion 52, as a main deformation portion, requires to have certain flexibility, while the mounting portion 51, as a supporting portion, requires relatively high strength. The mounting portion 51 is configured for being connected to the filter basket 3. During connection, the convenient connection modes such as bonding and clamping can be adopted. The free portion 52 is located in the gap between the rolling brush 4 and the filter basket 3, and can be deformed after being stressed to a certain extent, thereby increasing the gap between the rolling brush 4 and the filter basket 3. The gap between the rolling brush 4 and the filter basket 3 can be better controlled by the flexible baffle 5, so as to reduce the possibility of garbage escaping.

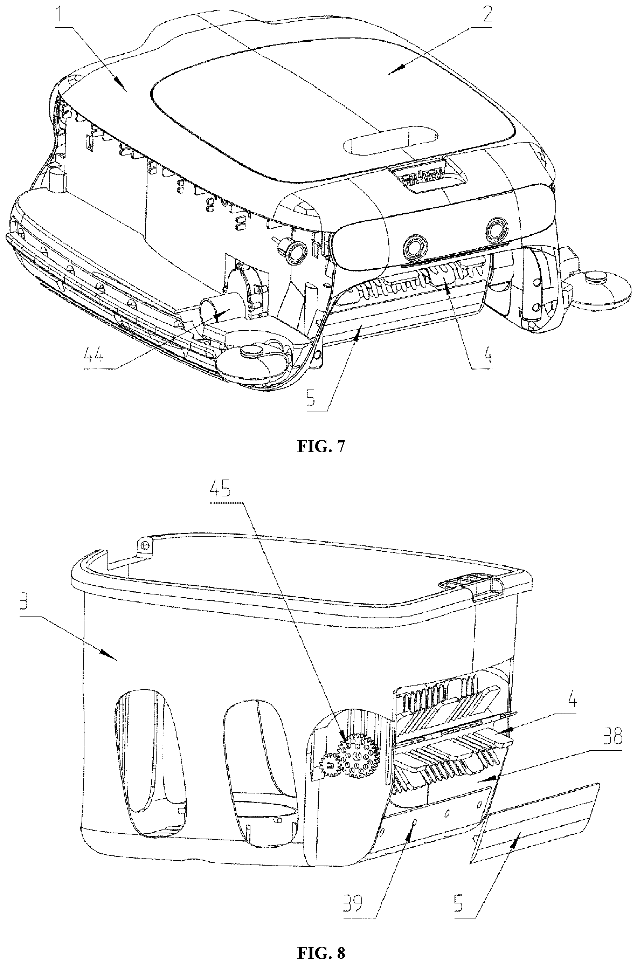

Further, as shown in FIG. 8 and FIG. 9, for the mounting form of the flexible baffle 5, the following structure may be adopted. The filter basket 3 is provided with mounting holes 39, and the mounting portion 51 is provided with mounting buckles 511, which are buckled into the mounting holes 39 in a direction towards the inside of the filter basket 3. At this time, the mounting portion 51 is located at an outer side of the filter basket 3, and a main body of the mounting buckles 511 are located at an inner side the filter basket 3. Since the mounting buckles 511 protrude into the filter basket 3, when moving towards the inlet 38 under the action of surging water, the garbage in the filter basket 3 can be intercepted by protruding portions of the mounting buckles 511. Therefore, the garbage can be prevented from moving towards the inlet 38 to a certain extent, thus reducing the possibility of garbage escaping from the filter basket 3.

In addition, the flexible baffle 5 may employ another mounting form. The filter basket 3 is provided with mounting hole 39s, the mounting portion 51 is provided with mounting buckles 511, the mounting buckles 511 are buckled into the mounting holes 39 in a direction towards the outside of the filter basket 3. In this case, the mounting portion 51 is located at the inner side of the filter basket 3. When the flexible baffles 5 are deformed into the filter basket 3, only the connection position of the mounting buckles 511 can restrict the flexible baffle 5. At this time, the flexible baffles 5 can obtain a larger deformation range, and the garbage with larger specifications can enter from the inlet 38, which can not only achieve a good sealing effect (the garbage is avoided from coming out of the inlet 38), but also facilitate the garbage to enter from the inlet 38.

As shown in FIG. 10, the mounting buckle 511 includes a cylinder, and a taper head connected with an end of the cylinder, a diameter of the cylinder is smaller than a diameter of the mounting hole 39, and a maximum diameter of the taper head is greater than the diameter of the mounting hole 39. The mounting buckle 511 is made of rubber or other flexible materials, and thus can be compressed and deformed to a certain extent. The tip of the taper head is inserted into the mounting hole 39, and after extrusion deformation, the whole taper head can pass through the mounting hole 39, such that the taper head and the flexible baffle 5 are located on both sides of the mounting hole 39 to achieve the mounting of the flexible baffle 5 on the filter basket 3.

As shown in FIG. 8 and FIG. 9, the flexible baffle 5 is provided between a lower side of the rolling brush 4 and the filter basket 3. When the rolling brush 4 rotates, the garbage floating on the water surface enters the filter basket 3 from the lower side of the rolling brush 4. A spacing between the rolling brush 4 and the flexible baffle 5 is less than a spacing between an upper side of the rolling brush 4 and the filter basket 3, the lower side is configured for the garbage to enter, and the upper side is for the water to flow out. Therefore, when the rolling brush 4 rotates, the resistance from the water body can be reduced on the basis of ensuring that the garbage is smoothly caught into the filter basket 3.

The rolling brush 3 may include a central shaft 41, and guide vanes radially distributed on the central shaft 41. The guide vane may be in any shape, for example, the guide vanes are all sheet-like guide vanes 42 (as shown in FIG. 16), the guide vanes are all columnar guide vanes 43, the guide vanes are brushes, the guide vanes are oval guide vanes, and the guide vanes include both sheet-like guide vanes 42 and columnar guide vanes 43 (as shown in FIG. 11). When the guide vanes include both sheet-like guide vanes 42 and columnar guide vanes 43, the width of the sheet-like guide vanes 42 is wider than that of the columnar guide vanes 43, and the sheet-like guide vanes 42 and the columnar guide vanes 43 are distributed at intervals in an axial direction and a circumferential direction of the central shaft, which can not only reduce the rotation resistance, but also collect the garbage floating on the water surface better.

Further, when the guide vanes are provided, the thickness of the middle portion of one or both of the sheet-like guide vane 42 and the columnar guide vane 43 can be equal to the edge thickness, or the thickness of the middle portion of one or both of the sheet-like guide vane 42 and the columnar guide vane 43 can be greater than the edge thickness. In this case, the strength of the guide vane can be improved. As the strength of the guide vane is enhanced, the guide vane with longer radial extension length can be provided on the basis of ensuring proper flexibility, so as to cover a larger area of the inlet 38. That is, the 38 can be provided in a wider range, which is better for garbage collection.

As shown in FIG. 7 and FIG. 8, the filter assembly includes transmission gears 45. The transmission gears 45 include a bull gear and a pinion meshed with each other. The pinion is rotatably mounted on the filter basket 3, the bull gear and the central shaft 41 are coaxially connected, and the pinion is connected with a motor 44. The motor 44 may be connected with the rolling brush 4 by means of the transmission gear 45 to drive the rolling brush 4 to rotate, thus rolling the garbage on the water surface into the filter basket 3.

As shown in FIG. 7 and FIG. 8, the depth of one side, close to the inlet 38, of the filter basket 3 is smaller than the depth of one side, away from the inlet 38, of the filter basket 3. After entering the filter basket 3 from the inlet 38, the garbage will fall to a deeper position in the filter basket 3, which is far away from the inlet 38, such that the garbage can be collected and kept better.

Specific examples are used herein for illustration of the principles and implementation methods of the present disclosure. The description of the embodiments is merely used to help illustrate the method and its core principles of the present disclosure. In addition, a person of ordinary skill in the art can make various modifications in terms of specific embodiments and scope of application in accordance with the teachings of the present disclosure. In conclusion, the content of this specification shall not be construed as a limitation to the present disclosure.

## Claims

1. A basket type filter assembly, comprising a filter basket, and a cover, wherein the filter basket is provided with a hinge portion on a side and a clamping portion on an opposite side; the hinge portion is hinged with one side of the cover, an other side of the cover is configured for being clamped with a buckle, and the other side of the cover is pressed against the clamping portion.

2. The basket type filter assembly according to claim 1, wherein the cover comprises a bottom, and a wall connected with the bottom, the bottom is provided with an edge on an outer side of the wall, and the edge is provided with rotating shafts; the hinge portion is provided with shaft holes, and each of the rotating shafts is in rotatable fit with a corresponding one of the shaft holes.

3. The basket type filter assembly according to claim 2, wherein the edge is provided with vertical plates opposite to each other, each of the vertical plates is provided with one of the rotating shafts at an outer side, and each of the vertical plates is provided with reinforcing ribs at an inner side; the hinge portion is provided with a groove, and the shaft holes are provided in two opposite side walls of the groove.

4. The basket type filter assembly according to claim 2, wherein the edge is provided with a clamping groove, and the clamping groove is configured for being clamped with the buckle.

5. The basket type filter assembly according to claim 2, wherein the basket type filter assembly is configured for being installed in a machine body of a water surface cleaning device, the machine body is provided with an opening for the basket type filter assembly to move in and out; the opening is provided with a supporting table at an inner diameter side, and the supporting table is configured for supporting the edge.

6. The basket type filter assembly according to claim 5, wherein limiting stop ribs are provided at one side, where the hinge portion is located, of the filter basket, a limiting surface is provided at a position corresponding to an inner side of the opening, the limiting stop ribs and the limiting surface extend in a direction along which the filter basket moves in and out, and the limiting surface is configured for limiting rotation of the limiting stop ribs around the clamping portion.

7. The basket type filter assembly according to claim 1, wherein the cover is provided with a concealed handle which is hollow, the filter basket is provided with a boss for holding on one side of the clamping portion, and the boss extends in a direction towards the concealed handle.

8. The basket type filter assembly according to claim 1, wherein the cover is provided with a concealed handle which is hollow, the filter basket is provided with a lift handle on one side, close to the clamping portion, of the filter basket, and the lift handle is arranged over and across the filter basket.

9. The basket type filter assembly according to claim 1, wherein an inlet is formed in the filter basket, the inlet and the clamping portion are located on a same side of the filter basket, the inlet is provided with a rolling brush, a flexible baffle is provided at one side, parallel to the rolling brush, of the inlet, and a rotating direction of the rolling brush orients towards an inside of the filter basket at the flexible baffle.

10. The basket type filter assembly according to claim 1, wherein a dosing box is provided at an inner bottom surface of the filter basket, the dosing box is provided with a chemical box cover, a peripheral wall of the chemical box cover is provided with V-shaped grooves, an outer wall of the dosing box is provided with protrusions, and each of the V-shaped grooves is buckled to a corresponding one of the protrusions to achieve a connection of the chemical box cover and the dosing box.

11. The basket type filter assembly according to claim 9, wherein the flexible baffle comprises a mounting portion and a free portion connected to each other, the mounting portion is connected to the filter basket, and the free portion is located in a gap between the rolling brush and the filter basket.

12. The basket type filter assembly according to claim 11, wherein the filter basket is provided with mounting holes, the mounting portion is provided with mounting buckles, each of the mounting buckles is buckled into a corresponding one of the mounting holes in a direction towards the inside of the filter basket, and the mounting portion is located at an outer side of the filter basket.

13. The basket type filter assembly according to claim 11, wherein the filter basket is provided with mounting holes, the mounting portion is provided with mounting buckles, each of the mounting buckles is buckled into a corresponding one of the mounting holes in a direction towards an outside of the filter basket, and the mounting portion is located at an inner side of the filter basket.

14. The basket type filter assembly according to claim 12 or 13, wherein each of the mounting buckles comprises a cylinder, and a taper head connected to an end of the cylinder; a diameter of the cylinder is smaller than a diameter of each of the mounting holes, and a maximum diameter of the taper head is greater than the diameter of the mounting hole.

15. The basket type filter assembly according to claim 14, wherein the flexible baffle is provided between a lower side of the rolling brush and the filter basket, and a spacing between the rolling brush and the flexible baffle is less than a spacing between an upper side of the rolling brush and the filter basket.

16. The basket type filter assembly according to claim 9, wherein the rolling brush comprises a central shaft, and guide vanes radially distributed on the central shaft, the guide vanes comprise sheet-like guide vanes and/or columnar guide vanes, and when both the sheet-like guide vanes and the columnar guide vanes are provided, the sheet-like guide vanes and the columnar guide vanes are distributed at intervals in an axial direction and a circumferential direction of the central shaft.

17. The basket type filter assembly according to claim 16, wherein a thickness of a middle portion of each of the sheet-like guide vanes and/or a thickness of a middle portion of each of the columnar guide vanes are/is greater than or equal to an edge thickness of each of the sheet-like guide vanes and/or each of the columnar guide vanes.
